# FASCICULE DE BREVET EUROPEEN

(11) **EP 2 126 456 B1**
(45) Date de publication et mention de la délivrance du brevet: **02.03.2011**
(21) Numéro de dépôt: 08709155.9
(22) Date de dépôt: 21.02.2008
(51) Int. Cl.: F17C 13/04

(54) **MONOBLOC POUR GAZ AVEC MANOMETRE INTEGRE**
EINSTÜCKIGE GASARMATUR MIT EINGEBAUTEM DRUCKMESSER
SINGLE-PIECE GAS FITTING WITH BUILT-IN PRESSURE GAUGE

(30) Priorité: 26.02.2007 LU 91319
(43) Date de publication de la demande: 02.12.2009
(73) Titulaire: LUXEMBOURG PATENT COMPANY S.A., 7440 Lintgen (LU)
(72) Inventeur: NOBLOT, Alain, F-21300 Chenoves (FR)
(74) Mandataire: Office Freylinger
(86) Numéro de dépôt international: PCT/EP2008/052117
(87) Numéro de publication internationale: WO 2008/107311

(56) Documents cités:
- EP-A- 1 522 774
- EP-A1- 0 995 945
- EP-A1- 1 441 273
- EP-A2- 0 438 065
- DE-A1- 3 119 858
- FR-A- 2 801 662

## Description

### Domaine technique

La présente invention concerne de façon générale un monobloc pour gaz avec manomètre intégré. Elle concerne en particulier un point d'utilisation de gaz avec un manomètre intégré. Un tel monobloc est connu de EP 0995945 A1, considéré comme art antérieur le plus proche.

### Etat de la technique

Un point d'utilisation constitue en principe un terminal multifonctions d'un réseau de gaz, par exemple dans un laboratoire, un atelier ou sur un équipement d'analyse ou de production. Il s'agit d'un module pré-assemblé qui est fixé sur une paroi ou un panneau, respectivement dans une armoire de distribution de gaz, et qui permet de réaliser lui seul plusieurs fonctions (comme par exemple : un réglage de la pression de gaz, une vérification de la pression de gaz, un réglage du débit de gaz et/ou une fonction d'arrêt de l'alimentation en gaz, ...), sans avoir à interconnecter sur place, à l'aide de tuyaux de gaz et de raccords, différents vannes/appareils indépendants (tel que qu'un détendeur, un manomètre, une vanne de réglage de débit, une vanne d'arrêt, ...).

Un point d'utilisation moderne comprend un corps monobloc sur la surface avant duquel sont généralement arrangés un manomètre, un détendeur, une vanne de réglage de débit et/ou une vanne d'arrêt. Les connexions entre les appareils sont réalisées par des canaux forés dans le corps monobloc, qui est un corps à section rectangulaire, conçu soit pour un montage vertical, soit pour un montage horizontal. Le manomètre est généralement un manomètre avec about arrière muni d'un filet extérieur, qui est vissé de façon étanche dans un alésage taraudé dans la face avant du corps monobloc.

Il y a aujourd'hui un besoin pour des points d'utilisation de gaz plus compacts, qui se laissent plus facilement agencer sur un panneau ou dans une armoire de distribution de gaz.

### Objets de l'invention

Un objet général est par conséquent de proposer des mesures qui permettent de créer un point d'utilisation de gaz plus compact, avec plus de libertés pour agencer ce dernier sur un panneau ou dans une armoire de distribution de gaz.

Une première mesure consiste à proposer un monobloc avec manomètre intégré, dans lequel la fixation du manomètre dans un logement du corps monobloc est facile et fiable, et qui permet en outre un ajustage facile de l'orientation du manomètre lors de son montage. En effet, en intégrant le boîtier du manomètre au moins partiellement dans un monobloc, on gagne de la place pour arranger d'autres appareils sur la surface avant du corps monobloc. De plus, un ajustage facile de l'orientation du manomètre lors de son montage, permet d'avoir plus de libertés en ce qui concerne l'orientation du point d'utilisation sur un panneau ou dans une armoire de distribution de gaz.

Un objet supplémentaire est de proposer un point d'utilisation de gaz avec un corps monobloc avec plusieurs appareils arrangés sur la surface avant du corps monobloc, dont un manomètre, qui offre de multiples possibilités de raccordement et rend possible un montage selon différentes orientations.

Un autre objet est de proposer un point d'utilisation de gaz avec un manomètre intégré et plusieurs autres appareils qui est particulièrement compact.

### Description générale de l'invention

Un point d'utilisation de gaz selon l'invention est défini à la revendication 1. L'invention concerne un point d'utilisation de gaz comprenant un corps monobloc ayant une surface avant, une surface arrière et des surfaces latérales. Dans ce corps monobloc sont agencés : un premier raccord d'entrée et un premier raccord de sortie ayant leur axes parallèles à une première direction ; un deuxième raccord d'entrée et un deuxième raccord de sortie ayant leur axes parallèles à une deuxième direction ; cette première et cette deuxième direction étant orthogonales entre elles. Sur la surface avant du corps monobloc sont arrangés plusieurs appareils, dont un manomètre avec un boîtier et un about de raccord central arrière est intégré dans ce corps monobloc. Le boîtier est logé dans un logement de manomètre accessible à partir de la surface avant. L'about de raccord arrière pénètre de façon étanche dans le corps monobloc, Un premier moyen de positionnement solidaire du manomètre et un deuxième moyen de positionnement solidaire du corps monobloc coopèrent de façon à pouvoir bloquer le manomètre en rotation dans son logement dans quatre positions angulaires différentes, qui sont chaque fois séparées d'un angle de 90°. Un tel point d'utilisation de gaz a l'avantage de pouvoir être construit de façon plus compacte et de présenter plusieurs orientations de montage et plusieurs directions de raccordement possibles.

De préférence, ce point d'utilisation de gaz comprend en outre un troisième raccord d'entrée et un troisième raccord de sortie, tous les deux localisés dans la surface arrière du corps.

Afin de permettre un raccordement d'appareils agencés de façon très compacte sur le corps monobloc, ce dernier comprend avantageusement au moins un alésage arrière accessible à partir de la surface arrière du corps et comprenant une paroi conique. Au moins un canal de liaison est formé par un alésage borgne foré dans le corps à travers la paroi conique de cet alésage arrière, selon un axe qui fait un angle aigu avec l'axe central de l'alésage arrière.

Dans une exécution préférée, on utilise aussi un tel alésage arrière pour fixer le manomètre axialement dans son logement. A cette fin, l'about de raccord arrière du manomètre pénètre de façon étanche dans cet alésage arrière, et ce dernier est fermé de façon étanche par un bouchon qui fixe en même temps le manomètre dans son logement.

Pour obtenir un point d'utilisation très compacte, le corps monobloc a avantageusement une forme allongée avec une première extrémité et une deuxième extrémité; les raccords d'entrée étant arrangés dans la première extrémité et les raccords de sortie étant arrangés dans la deuxième extrémité. Dans une vue en plan, la forme de ce corps monobloc peut être assimilée à celle d'un parallélogramme dont les coins sont arrondis et qui est muni d'un lobe de prolongement au niveau de chaque coin aigu.

Ce point d'utilisation compact comprend dans une exécution préférée les appareils suivants : une vanne d'arrêt, un détendeur et une vanne de réglage de débit. Ces appareils sont arrangés ensemble avec le manomètre du côté de la surface avant du corps et sont reliés entre eux par des canaux de liaison forés dans le corps. La première extrémité du corps présente un premier lobe de prolongement dans lequel est agencé le premier raccord d'entrée. La vanne d'arrêt est arrangée à proximité immédiate du premier lobe de prolongement. La deuxième extrémité présente un deuxième lobe de prolongement dans lequel est agencé le premier raccord de sortie. Le régulateur de débit est agencé à proximité immédiate du deuxième lobe de prolongement. Le détendeur est arrangé dans un premier coin concave du parallélogramme, et le manomètre est arrangé dans un deuxième coin concave du parallélogramme.

### Brève description des dessins

D'autres particularités, caractéristiques et problèmes résolus ressortiront de la description détaillée des modes de réalisation avantageux, conformes aux revendications, présentés ci-dessous, à titre d'illustration, en se référant aux dessins annexés. Dans ces dessins:
- FIG. 1:: est une vue en plan d'un point d'utilisation de gaz à corps monobloc selon l'invention ;
- FIG. 2:: est une vue tridimensionnelle du point d'utilisation de gaz de la FIG. 1 dans un montage vertical ;
- FIG. 3:: est une vue tridimensionnelle du point d'utilisation de gaz de la FIG. 1 dans un montage horizontal ;
- FIG. 4:: est une vue en élévation et coupe partielle selon la ligne de coupe brisée montrée dans la FIG. 1 ; et
- FIG. 5:: est un agrandissement d'un détail de la coupe partielle de la FIG. 4.

### Description d'une exécution préférée

Les figures en annexe montrent un dispositif pour des installations de distribution de gaz qu'on appelle généralement un point d'utilisation (en anglais : « point-of-use ») et qui est globalement repéré dans ces figures par le signe de référence 10. Un tel point d'utilisation 10 constitue un terminal d'un réseau de gaz, par exemple dans un laboratoire, un atelier ou sur un équipement d'analyse ou de production. Fixé sur une paroi, un panneau ou dans une armoire de distribution de gaz, il permet par exemple de vérifier et d'ajuster la pression, de régler le débit du gaz et de couper l'alimentation en gaz, ceci sans avoir à interconnecter sur place différents appareils isolés (tel que qu'un manomètre, un détendeur, une vanne de réglage de débit, une vanne d'arrêt, ...) par un ensemble de tuyaux et de raccords.

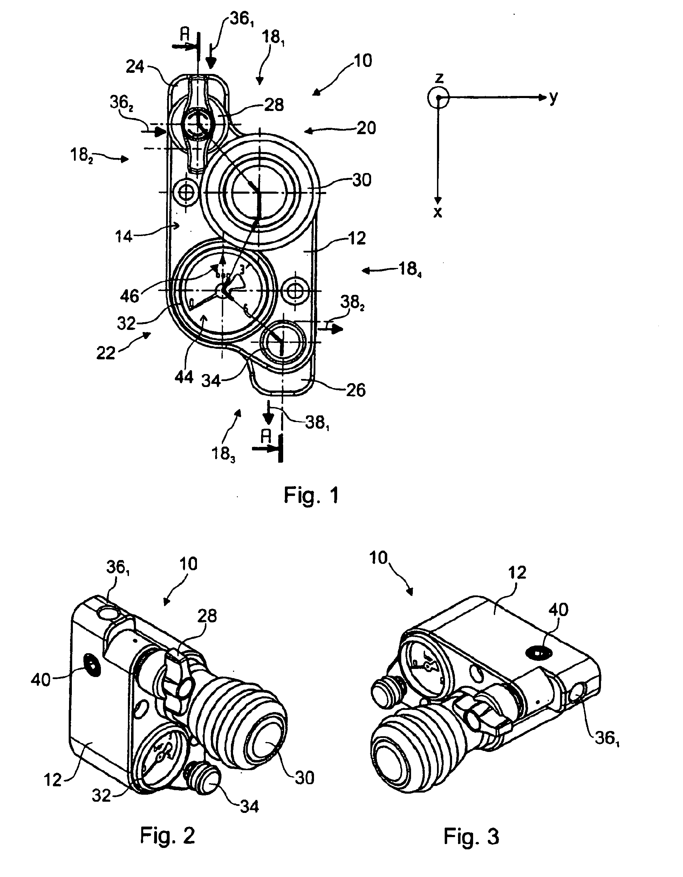

Le point d'utilisation 10 comprend un corps monobloc 12, soit en aluminium anodisé, soit en inox, soit en un autre matériau compatible avec le gaz en question. Ce corps monobloc a une surface avant 14, une surface arrière 16 (c.f. FIG. 3) et des surfaces latérales 18₁, 18₂, 18₃ et 18₄. Il a une forme allongé avec une première extrémité 20 et une deuxième extrémité 22. Dans la vue en plan de la FIG. 1, sa forme peut être assimilée à celle d'un parallélogramme aux coins arrondis et dont chaque coin aigu est muni d'un lobe de prolongement 24, 26. Ces lobes de prolongement 24, 26 ont une hauteur sensiblement plus faible que le reste du corps monobloc 12.

Le point d'utilisation 10 montré sur la FIG. 1 est équipé d'une vanne d'arrêt 28, de préférence une vanne d'arrêt ¼ de tour, d'un détendeur 30, d'un manomètre 32 et d'une vanne de réglage de débit 34. Ces appareils sont tous agencés d'une façon très compacte sur la surface avant 14 du corps monobloc 12. On notera que la vanne d'arrêt 28 est agencée à proximité immédiate du lobe de prolongement 24, tandis que la vanne de réglage de débit 34 est agencée à proximité immédiate du lobe de prolongement 26. Le détendeur 30 est agencé dans le premier coin obtus du parallélogramme, à côté de la vanne d'arrêt 28. Le manomètre 32 est agencé dans le deuxième coin obtus du parallélogramme, à côté de la vanne de réglage de débit 20. On notera que les arrondis des coins du parallélogramme épousent sensiblement le contour extérieur de l'appareil 28, 30, 32, 34 agencé dans le coin respectif. On appréciera aussi que l'agencement compact des l'appareil 28, 30, 32, 34 est favorisé par le fait que le manomètre est quasi entièrement noyé dans le corps monobloc 12. Ce « montage noyé » du manomètre permet en effet de fortement réduire l'espacement entre le détendeur 30 et le manomètre 32, respectivement la vanne de réglage de débit 20 et le manomètre 32.

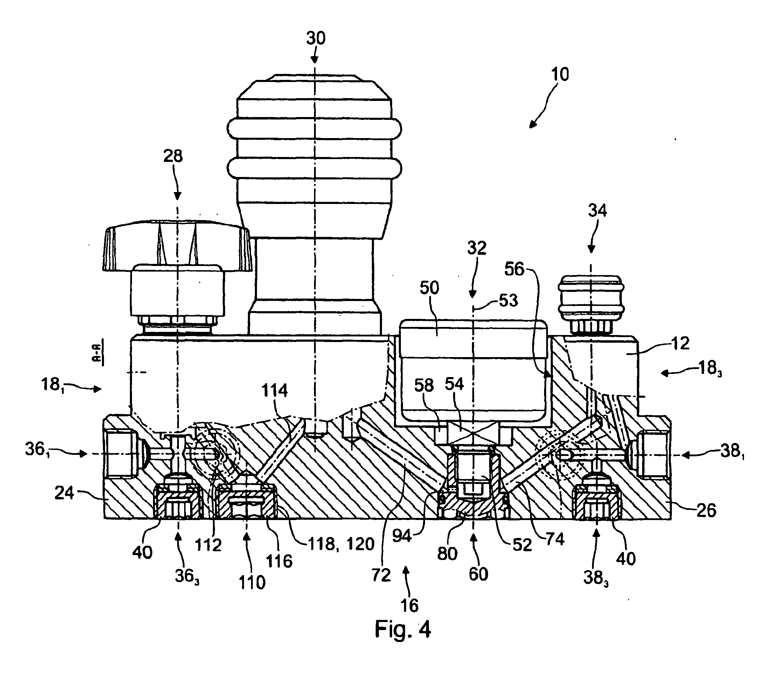

Dans la FIG. 1, les flèches 36₁ et 36₂ repèrent des raccords d'entrée agencés dans les surfaces latérales 18₁ et 18₂ du corps monobloc 12. Un troisième raccord d'entrée 36₃ est agencé dans la surface arrière 16 (voir FIG. 4). On remarquera que les raccords d'entrée 36₁, 36₂ et 36₃ sont agencés tous les trois dans la première extrémité du corps monobloc 12, et que le premier raccord d'entrée 36₁ est plus particulièrement agencé dans le lobe de prolongement 24.

Dans la FIG. 1, les flèches 38₁ et 38₂ repèrent des raccords de sortie agencés dans les surfaces latérales 18₃ et 18₄ du corps monobloc 12. Un troisième raccord de sortie 38₃ est agencé dans la surface arrière 16 (voir FIG. 4). On remarquera que les raccords de sortie 38₁, 38₂ et 38₃ sont agencés tous les trois dans la deuxième extrémité du corps monobloc 12, et que le premier raccord de sortie 38₁ est plus particulièrement agencé dans le lobe de prolongement 26.

Tous ces raccords d'entrée/de sortie 36/38 sont normalement des raccords femelles pour tuyaux de gaz, par exemple des raccords G1/4F ou NPT1/4F. Ils peuvent être des raccords de type double bague et être équipés d'une toile filtre inox. On notera que les raccords 36₁ et 38₁ ont leur axe parallèle à une première direction, qui est représentée par l'axe x, alors que les raccords 36₂ et 38₂ ont leur axe parallèle à une deuxième direction, qui est représentée par l'axe y et qui est orthogonale à la première direction x. Les raccords 36₃ et 38₃ ont leur axe parallèle à une troisième direction, qui est représentée par l'axe z et qui est perpendiculaire au plan de la FIG. 1.

Pour raccorder le point d'utilisation 10 dans un réseau de distribution de gaz, on peut par exemple connecter un tuyau d'entrée (non montré) à un des raccords d'entrée 36₁, 36₂ et 36₃ et un tuyau de sortie (non montré) à un des trois raccords de sortie 38₁, 38₂ et 38₃, soit selon la première direction x, la deuxième direction y ou la troisième direction z. Il est cependant aussi possible de connecter un tuyau de gaz à deux, voire même trois raccords d'entrée 36₁, 36₂ et 36₃, respectivement à deux, voire même trois raccords de sortie 38₁, 38₂ et 38₃. Les raccords 36, 38 auxquels aucun tuyau n'est raccordé, sont fermés de façon étanche par un bouchon 40 (voir FIG. 4).

Les FIG. 2 et FIG. 3 illustrent une particularité importante du point d'utilisation 10. En effet, ce point d'utilisation 10 peut être monté verticalement, tel que montré sur les FIG. 1 et FIG. 2, et horizontalement, tel que montré sur la FIG. 3. De plus, lors d'un montage vertical, ladite première extrémité 20 peut être tournée vers le haut ou vers le bas (non montré), et lors d'un montage horizontal, ladite première extrémité 20 peut être tournée vers la droite ou vers la gauche (non montré).

Sur la FIG. 1, on voit un cadran 44 du manomètre 32, sur lequel on a indiqué un repère d'orientation 46 du cadran 44, représentée, pour fixer les idées, par un petit triangle. Si ce triangle 46 pointe verticalement vers le haut, le cadran 44 a une orientation optimale pour sa lecture. Au lieu du triangle 46, le cadran 44 du manomètre 32 peut bien entendu porter d'autres repères d'orientation qui permettent de déterminer une orientation optimale pour sa lecture. Ainsi, dans le cas du cadran 44, l'orientation de l'indication « bar » et l'orientation des chiffres serait déjà entièrement suffisantes pour servir de repère d'orientation.

Comme le point d'utilisation 10 est conçu pour être monté selon quatre orientations différentes (à savoir ladite première extrémité 20 du corps 12 tournée verticalement vers le haut ou vers le bas, ou horizontalement vers la droite ou vers la gauche), on a aussi prévu de pouvoir monter le manomètre 32 selon quatre orientations angulaires différentes, qui sont chaque fois séparées d'un angle de 90°. Ceci permet d'orienter la manomètre 32 dans le corps monobloc en fonction de l'orientation du point d'utilisation 10, de façon à ce que son cadran 44 ait toujours une orientation optimale pour sa lecture.

Sur la FIG.4, on voit le manomètre 32 monté dans le corps monobloc 12. Ce manomètre 32 est un manomètre standard avec un boîtier cylindrique 50 et un about de raccord 52 agencé de façon centrale au dos du boîtier 50 (l'about de raccord 52 et le boîtier cylindrique 50 ont un axe central 53 commun). La référence 54 repère un carré de serrage 54 qui porte l'about de raccord 52. Le boîtier 50 est logé dans un logement de manomètre 56 accessible à partir de la surface avant 14 du corps 12. On voit que le boîtier 50 ne dépasse que légèrement du logement de manomètre 56 (il s'agit d'un dépassement de seulement quelques millimètres). Il serait cependant également possible de noyer le boîtier 50 entièrement dans le logement de manomètre 56, voire de réaliser un dépassement plus important du boîtier 50, à condition bien entendu de ne pas gêner l'accès au détendeur 30 et à la vanne de réglage de débit 34 .

Le carré de serrage 54 est logé dans un évidement 58 à section rectangulaire. Perpendiculairement au plan de la FIG. 4, cet évidement 58 à sensiblement la même largeur que la largeur du carré de serrage 54. Si la dimension de l'évidement 58 dans le plan du dessin est supérieure à la largeur du carré de serrage 54, ceci est dû au fait qu'un évidement à section rectangulaire se laisse plus facilement usiner qu'un évidement à section carrée. Le carré de serrage 54 et l'évidement 58 forment des moyens de positionnement qui coopèrent pour bloquer le manomètre 32 en rotation dans son logement de manomètre 56 dans quatre positions angulaires différentes, qui sont chaque fois séparées d'un angle de 90°.

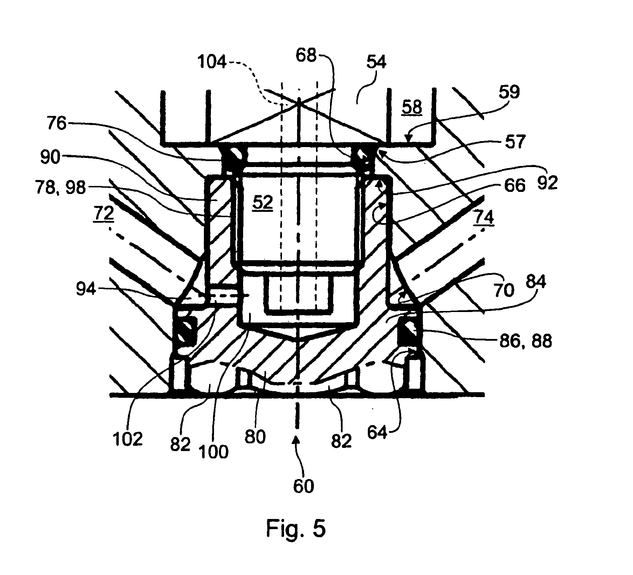

Sur la FIG. 5 on voit que le carré de serrage 54 forme autour de l'about de raccord 52 un épaulement 57 avec lequel le manomètre 32 prend appui sur le fond 59 l'évidement 58. L'about de raccord 52 lui-même pénètre dans un alésage arrière 60.

L'alésage arrière 60 présente une embouchure arrière dans la surface arrière 16 du corps 12 et constitue un alésage étagé avec plusieurs sections. Une section cylindrique arrière 64 est agencée du coté de la surface arrière 16 du corps 12. Une section cylindrique avant 66, d'un diamètre plus petit, est agencée du coté du logement de manomètre 56. Une section cylindrique de passage68, d'un diamètre encore plus petit, fait communiquer la section cylindrique avant 66 avec le logement de manomètre 56. Une section conique de transition 70 fait communiquer la section cylindrique arrière 64 avec la section cylindrique avant 66.

Les références 72 et 74 repèrent deux canaux de liaison internes au corps monobloc 12. Ces canaux de liaison 72 et 74 sont formés par des alésages borgnes forés dans le corps 12 à travers la paroi de la section conique de transition 70, selon un axe qui définit un angle aigu avec l'axe central de l'alésage arrière 60.

L'about de raccord 52 du manomètre 32 pénètre à travers la section cylindrique de passage68 dans la section cylindrique avant 66. Un anneau d'étanchéité 76 logé dans une saignée circulaire de l'about de raccord 52 rend étanche un jeu radial entourant l'about de raccord 52 dans la section cylindrique de passage68. Dans la section cylindrique avant 66, l'about de raccord 52 porte un filet extérieur 78.

Le signe de référence 80 repère globalement un bouchon qui est vissé sur le filet extérieur 78 de l'about de raccord 52. Ce bouchon 80 ferme l'alésage arrière 60 de façon étanche du côté de son embouchure dans la surface arrière 16 du corps 12 et fixe en même temps le manomètre 32 axialement dans le corps 12.

Le bouchon 80 comprend à son extrémité arrière une tête polygonale 82 conçue pour y accoupler un outil servant à transmettre un couple de serrage au bouchon 80. Cette tête polygonale 82 est entièrement noyée dans l'alésage arrière 60. On nécessite une douille spéciale pouvant pénétrer dans l'alésage arrière 60 et s'y accoupler à la tête polygonale 82, pour transmettre un couple de serrage au bouchon 80.

En-dessous de la tête polygonale 82, le bouchon 80 comprend une section cylindrique 84 avec une saignée circulaire 86. Dans cette saignée circulaire 86 est logé un anneau d'étanchéité 88. Ce dernier rend étanche un jeu radial entourant la section cylindrique 84 du bouchon 80 dans la section cylindrique arrière 64 de l'alésage arrière 60. On notera que l'anneau d'étanchéité 88 est radialement comprimé entre le fond de la saignée circulaire 86 et la paroi cylindrique de la section cylindrique arrière 64.

L'extrémité avant du bouchon 80 est formée par un manchon cylindrique 90. Ce dernier est ajusté dans la section cylindrique avant 66 de l'alésage arrière 60 avec un jeu fonctionnel assurant une rotation guidée du manchon cylindrique 90 dans cette section cylindrique avant 66. La référence 92 repère un épaulement qui constitue une butée axiale pour le bouchon 80 dans l'alésage arrière 60. Le bouchon 80 vissé sur l'about de raccord 52 prend appui sur cet épaulement 92 pour tirer le manomètre 32 dans le logement de manomètre 56, fixant ainsi le manomètre 32 axialement dans le corps 12.

Le manchon cylindrique 90 du bouchon 80 se prolonge à travers la section conique de transition 70 de l'alésage arrière 60, dans laquelle il définit une paroi interne d'une chambre annulaire externe 94. Un alésage borgne 96 traverse axialement le manchon cylindrique 90 du bouchon 80 sur toute sa longueur. Cet alésage borgne 96 du bouchon 80 comprend un filet intérieur 98, dans lequel le filet extérieur 78 de l'about de raccord 52 est vissé. On notera que l'alésage borgne 96 est plus profond que la longueur de l'about de raccord 52 vissée dans l'alésage borgne 96, de sorte qu'il subsiste au fond de l'alésage borgne 96 une chambre interne 100. La référence 102 indique un orifice de communication dans la paroi du manchon cylindrique 90. Cet orifice 102 fait communiquer la chambre interne 100, à l'intérieur du bouchon 80, avec la chambre annulaire externe 94, dans laquelle débouchent les canaux de liaison 72 et 74. Le gaz entre par le canal de liaison 72 dans la chambre annulaire externe 94 et passe par l'orifice de communication 102 dans la chambre interne 100 du bouchon 80. Dans cette dernière, le gaz peut pénétrer dans un canal axial 104 de l'about de raccord 52, qui amène le gaz dans le boîtier 50 du manomètre 32.

Sur la FIG. 4 on voit que le canal de liaison 72 raccorde la sortie basse pression du détendeur 30 à la chambre annulaire externe 94. A travers cette chambre annulaire 94, le gaz passe à travers le canal de liaison 74 dans la vanne de réglage de débit 34. La sortie de cette vanne de réglage de débit 34 est connectée à travers un canal de liaison 106 aux raccords de sorties 38₁, 38₂ et 38₃.

Sur la FIG. 4, la référence 110 indique globalement un deuxième alésage arrière. La fonction de ce deuxième alésage arrière 110 est de permettre le forage de canaux de liaison obliques 112, 114 supplémentaires dans le corps 12. Ces canaux de liaison 112, 114 relient la sortie de la vanne d'arrêt 28 à l'entrée du détendeur 30. Vu que cet alésage arrière 110 ne sert pas à la fixation d'un manomètre, il est simplement fermé à l'aide d'un bouchon 116 vissé à l'aide d'un filet extérieur 118 dans un filet intérieur 120 de alésage arrière 110. Il sera cependant apprécié que les alésages arrières 60 et 110 contribuent tous les deux à obtenir l'agencement particulièrement compact des appareils 28, 30, 32, 34.

### Légende des figures :

- 10: point d'utilisation
- 12: corps monobloc
- 14: surface avant (de 12)
- 16: surface arrière (de 12)
- 18ᵢ: surfaces latérales (de 12)
- 20: première extrémité (de 12)
- 22: deuxième extrémité (de 12)
- 24: lobe de prolongement (de 12)
- 26: lobe de prolongement (de 12)
- 28: vanne d'arrêt
- 30: détendeur
- 32: manomètre
- 34: vanne de réglage de débit
- 36ᵢ: raccord d'entrée (de 12)
- 38ᵢ: raccords de sortie (de 12)
- 40: bouchon
- 44: cadran (de 32)
- 46: repère d'orientation (de 44)
- 50: boîtier cylindrique (de 32)
- 52: about de raccord (de 32)
- 54: carré de serrage (de 32)
- 56: logement de manomètre
- 58: évidement (dans 56)
- 60: alésage arrière (dans 12)
- 64: section cylindrique arrière (de 60)
- 66: section cylindrique avant (de 60)
- 68: section cylindrique de passage (de 60)
- 70: section conique de transition (de 60)
- 72: canal de liaison (dans 12)
- 74: canal de liaison (dans 12)
- 76: anneau d'étanchéité (de 52)
- 78: filet extérieur (de 52)
- 80: bouchon
- 82: tête polygonale (de 80)
- 84: section cylindrique (de 80)
- 86: saignée circulaire (de 80)
- 88: anneau d'étanchéité (de 80)
- 90: manchon cylindrique (de 80)
- 92: épaulement (butée axiale)
- 94: chambre annulaire externe
- 96: alésage borgne (dans 80)
- 98: filet intérieur (dans 96)
- 100: chambre interne (dans 80)
- 102: orifice de communication (dans 80)
- 104: canal axial (dans 52)
- 106: canal de liaison (dans 12)
- 110: deuxième alésage arrière (dans 12)
- 112: canal de liaison (dans 12)
- 114: canal de liaison (dans 12)
- 116: bouchon (pour 110)
- 118: filet extérieur (sur 116)
- 120: filet intérieur (dans 110)

## Revendications

1. Point d'utilisation de gaz comprenant :
un corps monobloc (12) ayant une surface avant (14), une surface arrière (16) et des surfaces latérales (18); plusieurs appareils (28, 30, 32, 34) arrangés sur la surface avant (14) du corps monobloc (12), dont un manomètre (32) avec un boîtier (50) et un about de raccord (52) central arrière, ledit boîtier (50) étant logé dans un logement de manomètre (32) accessible à partir de ladite surface avant (14), ledit about de raccord (52) pénétrant de façon étanche dans ledit corps monobloc (12); **caractérisé en ce que** dans lesdites surfaces latérales (18), un premier raccord d'entrée (36₁) et un premier raccord de sortie (38₁) ont leur axes parallèles à une première direction (x), un deuxième raccord d'entrée (36₂) et un deuxième raccord de sortie (38₂) ont leur axes parallèles à une deuxième direction (y), ladite première direction (x) et ladite deuxième direction (y) étant orthogonales entre elles ; et **en ce qu'**il comprend un premier moyen de positionnement (54) solidaire dudit manomètre (32) et un deuxième moyen de positionnement (58) solidaire du dit corps monobloc (12), lesdits premiers et deuxième moyens de positionnement (54, 58) coopérant de façon à pouvoir bloquer ledit manomètre (32) en rotation dans son logement de manomètre (56) dans quatre positions angulaires différentes, qui sont chaque fois séparées d'un angle de 90°.

2. Point d'utilisation de gaz selon la revendication 1, comprenant en outre :
un troisième raccord d'entrée (36₃) et un troisième raccord de sortie (38₃), tous les deux localisés dans ladite surface arrière (16) du corps (12).

3. Point d'utilisation de gaz selon la revendication 1 ou 2, dont ledit corps (12) comprend :
au moins un alésage arrière (60) accessible à partir de ladite surface arrière (16) dudit corps (12) et comprenant une paroi conique (70) ; et
au moins un canal de liaison (72, 74) foré dans ledit corps (12) à travers ladite paroi conique (70) dudit alésage arrière (60), selon un axe qui fait un angle aigu avec l'axe central dudit alésage arrière (60) ;
et, de préférence :
ledit about de raccord (52) pénètre de façon étanche dans ledit alésage arrière (60) ; et
ledit un alésage arrière (60) est fermé de façon étanche par un bouchon (80) qui fixe en même temps ledit manomètre (32) dans son logement de manomètre (56).

4. Point d'utilisation de gaz selon l'une des revendications 1 à 3, dans lequel:
ledit corps monobloc. (12) a une forme allongée avec une première extrémité (20) et une deuxième extrémité (22) ; et
lesdits raccords d'entrée (36) sont arrangés dans ladite première extrémité (20) et lesdits raccords de sortie sont arrangés dans ladite deuxième extrémité (22).

5. Point d'utilisation de gaz selon la revendication 4, dans lequel:
la forme dudit corps monobloc (12) dans une vue en plan peut être assimilée à celle d'un parallélogramme dont les coins sont arrondis et qui est muni d'un lobe de prolongement (24, 26) au niveau de chaque coin aigu ;
et dans lequel, de préférence :
une vanne d'arrêt (28), un détendeur (30) et une vanne de réglage de débit (34) sont arrangés ensemble avec ledit manomètre (32) du côté de ladite surface avant (14) dudit corps (12) et sont reliés entre eux par des canaux de liaison (72, 74, 112, 114) forés dans ledit corps (12)

6. Point d'utilisation de gaz selon la revendication 5, dans lequel:
ladite première extrémité (20) présente un premier lobe de prolongement (24) dans lequel est agencé ledit premier raccord d'entrée (36₁);
ladite vanne d'arrêt (28) est arrangée à proximité immédiate dudit premier lobe de prolongement (24);
ladite deuxième extrémité (22) présente un deuxième lobe de prolongement (26) dans lequel est agencé ledit premier raccord de sortie (38₁) ;et ledit régulateur de débit (34) étant agencé à proximité immédiate dudit deuxième lobe de prolongement (26) ;
et dans lequel, de préférences
ledit détendeur (30) est arrangé dans un premier coin concave dudit parallélogramme; et
ledit manomètre (32) est arrangé dans un deuxième coin concave dudit parallélogramme.

## Claims

1. A gas point of use comprising
a single-piece body (12) having a front surface (14), a rear surface (16) and side surfaces (18);
a plurality of devices (28, 30, 32, 34) arranged on the front surface (14) of the single-piece body (12), including a pressure gauge (32) with a casing (50) and a central rear connector end-piece (52), said casing (50) being accommodated in a pressure gauge (32) receptacle accessible from said front surface (14), said connector end-piece (52) penetrating in a sealed manner into said single-piece body (12);
**characterised in that**,
in said side surfaces (18), a first inlet connector (36₁) and a first outlet connector (38₁) have their axes parallel to a first direction (x), a second inlet connector (36₂) and a second outlet connector (38₂) have their axes parallel to a second direction (y), said first direction (x) and said second direction (y) being orthogonal to one another;
and **in that** it comprises
a first positioning means (54) integral with said pressure gauge (32) and a second positioning means (58) integral with said single-piece body (12), said first and second positioning means (54, 58) cooperating so as to be capable of locking said pressure gauge (32) rotationally in its pressure gauge receptacle (56) in four different angular positions, each of which is separated by an angle of 90°,

2. A gas point of use according to claim 1, furthermore comprising a third inlet connector (36₃) and a third outlet connector (38₃), both located in said rear surface (16) of the body (12).

3. A gas point of use according to claim 1 or claim 2, said body (12) of which comprises
at least one rear bore (60) accessible from said rear surface (16) of said body (12) and comprising a conical wall (70); and
at least one connecting channel (72, 74) drilled in said body (12) through said conical wall (70) of said rear bore (60), along an axis which forms an acute angle with the central axis of said rear bore (60);
and preferably
said connector end-piece (52) penetrates in leakproof manner into said rear bore (80); and
said one rear bore (60) is closed in leakproof manner by a stopper (80) which at the same time fixes said pressure gauge (32) in its pressure gauge receptacle (56).

4. A gas point of use according to any one of claims 1 to 3, in which:
said single-piece body (12) has an elongate shape with a first end (20) and a second end (22); and
said inlet connectors (36) are arranged in said first end (20) and said outlet connectors are arranged in said second end (22)

5. A gas point of use according to claim 4, in which:
the shape of said single-piece body (12) in plan view may be compared with that of a parallelogram having rounded corners and which is provided with an extension lobe (24, 26) at each acute corner;
and in which, preferably
a stop valve (28), a pressure-reducing valve (30) and a flow rate regulating valve (34) are arranged together with said pressure gauge (32) on the front surface (14) side of said body (12) and are connected to one another by connecting channels (72, 74, 112, 114) drilled in said body (12).

6. A gas point of use according to claim 5, in which:
said first end (20) has a first extension lobe (24) in which is arranged said first inlet connector (36₁);
said stop valve (28) is arranged in the immediate vicinity of said first extension lobe (24);
said second end (22) has a second extension lobe (26) in which is arranged said first outlet connector (38₁); and
said flow rate regulator valve (34) being arranged in the immediate vicinity of said second extension lobe (26);
and in which, preferably:
said pressure-reducing valve (30) is arranged in a first concave corner of said parallelogram; and
said pressure gauge (32) is arranged in a second concave corner of said parallelogram

## Patentansprüche

1. Gasarmatur umfassend
- ein einstückiges Gehäuse (12) mit einer vorderen Fläche (14), einer hinteren Fläche (16) und seitlichen Flächen (18);
- mehrere an der vorderen Fläche (14) des einstückigen Gehäuses (12) angeordnete Geräte (28, 30, 32, 34), darunter ein Druckmesser (32) mit einem Gehäuse (50) und einem hinteren, mittigen Stutzenendstück (52), wobei das Gehäuse (50) in einer von der vorderen Fläche (14) aus zugänglichen Aufnahme für das Druckmesser (32) gelagert ist und das Stutzenendstück (52) dicht in das einstückige Gehäuse (12) eindringt;
**dadurch gekennzeichnet, dass** in den seitlichen Flächen (18) die Achsen eines ersten Eingangsstutzens (36₁) und eines ersten Ausgangsstutzens (38₁) parallel zu einer ersten Richtung (x) verlaufen, die Achsen eines zweiten Eingangsstutzen (36₂) und eines zweiten Ausgangsstutzens (38₂) parallel zu einer zweiten Richtung (y) verlaufen, wobei die erste Richtung (x) und die zweite Richtung (y) orthogonal zueinander sind, und dass sie ein mit dem Druckmesser (32) verbundenes, erstes Positioniermittel (54) und ein mit dem einstückigen Gehäuse (12) verbundenes, zweites Positioniermittel (58) aufweist, wobei das erste und zweite Positioniermittel (54, 58) zusammenwirken, um das Druckmesser (32) in der Druckmesseraufnahme (56) in vier unterschiedlichen Winkelstellungen drehfest zu halten, die jeweils um einen Winkel von 90° voneinander getrennt sind

2. Gasarmatur nach Anspruch 1, weiterhin umfassend,
einen dritten Eingangsstutzen (36₃) und einen dritten Ausgangsstutzen (38₃), die beide in der hinteren Fläche (16) des Gehäuses (12) lokalisiert sind.

3. Gasarmatur nach Anspruch 1 oder 2, deren Gehäuse (12) umfasst:
- mindestens eine hintere Bohrung (60), die von der hinteren Fläche (16) des Gehäuses (12) aus zugänglich ist und eine konische Wandung (70) umfasst; und
- mindestens einen durch die konische Wandung (70) der hinteren Bohrung (60) hindurch in das Gehäuse (12) eingebohrten Verbindungskanal (72, 74) entlang einer Achse, die mit der Mittelachse der hinteren Bohrung (60) einen spitzen Winkel bildet;
wobei vorzugsweise
- das Stutzenendstück (52) dicht in die hintere Bohrung (60) eindringt; und
- die hintere Bohrung (60) dicht mit einem Stopfen (80) verschlossen ist, der gleichzeitig den Druckmesser (32) in seiner Aufnahme (56) festlegt

4. Gasarmatur nach einem der Ansprüche 1 bis 3, bei der:
- das einstückige Gehäuse (12) eine längliche Form mit einem ersten Ende (20) und einem zweiten Ende (22) hat; und
- die Eingangsstutzen (36) im ersten Ende (20) angeordnet sind und die Ausgangsstutzen im zweiten Ende (22) angeordnet sind

5. Gasarmatur nach Anspruch 4, bei der:
die Form des einstückigen Gehäuses (12) in einer Draufsicht mit der Form eines Parallelogramms gleichgesetzt werden kann, dessen Ecken abgerundet sind und das an jeder spitzen Ecke mit einem Verlängerungslappen (24, 26) versehen ist;
und bei der vorzugsweise;
ein Absperrventil (28), ein Druckminderer (30) und ein Mengenregelventil (34) zusammen mit dem Druckmesser (32) auf der Seite der vorderen Fläche (14) des Gehäuses (12) angeordnet sind und durch in das Gehäuse (12) eingebohrte Verbindungskanäle (72, 74, 112, 114) miteinander verbunden sind.

6. Gasarmatur nach Anspruch 5, bei der
- das erste Ende (20) einen ersten Verlängerungslappen (24) aufweist, in dem der erste Eingangsstutzen (36₁) angeordnet ist;
- das Absperrventil (28) in unmittelbarer Nähe des ersten Verlängerungslappens (24) angeordnet ist;
- das zweite Ende (22) einen zweiten Verlängerungslappen (26) aufweist, in dem der erste Ausgangsstutzen (38₁) angeordnet ist; und
- der Mengenregler (34) in unmittelbarer Nähe des zweiten Verlängerungslappens (26) angeordnet ist;
und bei der vorzugsweise
- der Druckminderer (30) in einer ersten konkaven Ecke des Parallelogramms angeordnet ist; und
- der Druckmesser (32) in einer zweiten konkaven Ecke des Parallelogramms angeordnet ist
